# EUROPÄISCHE PATENTANMELDUNG

(11) **EP 1 640 181 A2**
(43) Veröffentlichungstag der Anmeldung: **29.03.2006**
(21) Anmeldenummer: 05020547.5
(22) Anmeldetag: 21.09.2005
(51) Int. Cl.: B60B 21/02, B60B 21/04

(54) **Felge eines Rads**

(30) Priorität: 25.09.2004 DE 102004046635
(71) Anmelder: RONAL GmbH, 76694 Forst (DE)
(72) Erfinder: Böcker, Karl-Heinz, 76707 Hambrücken (DE)
(74) Vertreter: Lempert, Jost

(57) **Zusammenfassung**

Ein Rad mit einer Felge (1a), die ein Tiefbett (6) und einen von diesem zum Reifensitz ansteigenden Übergangsbereich aufweist, ist dadurch gekennzeichnet, dass der Übergangsbereich zwischen Tiefbett und Reifensitz durch ein Material mit gegenüber dem Radmaterial geringerer Dichte gebildet ist.

## Beschreibung

Die Erfindung betrifft ein Rad mit einer Felge, die ein Tiefbett und einen von diesem zum Reifensitz ansteigenden Übergangsbereich aufweist.

Im Automobilbau geht die Tendenz dahin, das Gewicht des Fahrzeugs möglichst weitgehend zu reduzieren. Dies gilt auch für die Räder, einschließlich Metallräder.

Nach der 1 210 233 B1 sind die Felgen der Räder hohl ausgebildet. Dies kann dadurch bewerkstelligt werden, dass die Räder mehrteilig aufgebaut sind und nach dem Gießen die Radteile miteinander verbunden werden. Diese Vorgehensweise ist zwar beim Gießen preisgünstig, erfordert jedoch eine aufwändige Weiterbearbeitung der Räder. Eine weitere Möglichkeit hohle Felgen herzustellen, besteht darin, während des Gießens zusätzliche Teile an die Felge anzugießen, die dann nach dem Guss durch Kaltverformen in die endgültige Form gebracht werden. Auch dies erzwingt eine teure Nachbearbeitung der Felgen.

Die EP 1 210 233 B1 zeigt das Einsetzen von Teilen in ein Rad, die dann durch Schweißen, Kleben oder Börteln mit der Felge verbunden werden. Auch dies erfordert eine aufwändige Nachbearbeitung des Rads.

Nach der WO 02/28669 A1 werden Kerne im Rad miteingegossen, die ein mittleres spezifisches Gewicht haben, das kleiner als jenes des für den Guss verwendeten Metalls ist. Die WO 02/28669 A1 nennt konstant einen Presskörper aus einem porösen Silikatmaterial, da bei diesem durch die hohe Temperaturfestigkeit ein Vorheizen der Gussform möglich ist, so dass keinerlei Lufteinschlüsse in den Leichtmetallguss eingelagert werden. Dieses Verfahren ist sehr teuer und aufwändig, da für jedes Gussteil die Kerne hergestellt und in die Form eingelegt werden müsse.

Aufgabe der Erfindung ist es daher, ein Rad zu schaffen, bei dem eine Gewichtsersparnis in einfacher Weise erreichbar ist.

Die Aufgabe wird erfindungsgemäß durch ein Rad der eingangs genannten Art gelöst, bei dem der Übergangsbereich zwischen Tiefbett und Reifensitz durch ein Material mit gegenüber dem Radmaterial geringerer Dichte gebildet ist.

Durch die Erfindung wird bei der Herstellung von Aluminiumgussrädern, insbesondere im Niederdruckkokillengussverfahren, dem gängigsten Verfahren zur Herstellung von Aluminiumrädern, in einfacher und kostengünstiger Weise eine Materialreduzierung, eine Gewichtsersparnis und eine Reduzierung des Bearbeitungsaufwands erreicht.

Gemäß einer bevorzugten Ausgestaltung der Erfindung ist vorgesehen, dass das Material des Übergangsbereichs aus Kunststoff ist.

Grundsätzlich kann der Übergangsbereich unter Verwendung einer Gussform auf den Metall-Radkörper aufgegossen werden. Dem gegenüber ist aber in einer äußerst bevorzugten Ausgestaltung vorgesehen, dass der Übergangsbereich ein aus mindestens einem Teilring mit mindestens einer Grenzstelle besteht. Hierdurch kann der Einlegering separat vom Radkörper hergestellt und nachträglich an diesem angebracht werden, indem er, soweit er einstückig ausgebildet ist, durch Aufbiegen über den Radkörper geführt und dann an diesem in noch zu beschreibender Weise festgelegt wird. In bevorzugter Ausgestaltung kann dabei vorgesehen sein, dass der Übergangsbereich ein aus mindestens einem Teilring mit mindestens einer Grenzstelle besteht, wobei der Einlegering höchst vorzugsweise aus lediglich zwei Teilringen besteht. In Weiterbildung kann dabei vorgesehen sein, dass die Teilringe identisch sind. Durch Ausgestaltung des Einlegerings durch mehrere Teilringe ist ein Aufbiegen beim Umlegen des Teilrings um den metallischen Radkörper nicht notwendig, so dass auch für den - mehrteiligen - Einlegering Materialien verwendet werden, bei denen ein solches Aufbiegen problematisch wäre. Die identische Ausbildung der Teilringe - bei mehreren Teilringen - ermöglicht diese mit einer Form zu Spritzen und erspart daher also mehr als eine Form.

Während grundsätzlich vorgesehen sein kann, dass der Übergangsbereich massiv ausgebildet ist, sieht eines äußerst bevorzugte Ausgestaltung vor, dass die Übergangsbereiche Hohlräume aufweisen, wobei insbesondere die Übergangsbereiche Verstärkungsrippen aufweisen. Hierdurch kann eine weitere Gewichtsersparnis erreicht werden, ohne dass komplizierte und aufwändige Maßnahmen notwendig sind. Um trotz Vorsehen eines Übergangsbereichs aus einem anderen und leichteren Material, als dem des Radkörpers ein zuverlässiges Einbringen von Luft in den auf dem Rad aufzusetzenden Reifen zu ermöglichen, sieht eine weitere bevorzugte Ausgestaltung vor, dass der Übergangsbereich mindestens einen Ventildurchlass aufweist.

Wesentlich ist, dass erfindungsgemäß ausschließlich der von Betriebskräften unbelastete Bereich des Rades mit dem Material geringerer Dichte ausgebildet ist, also ausschließlich der Bereich zwischen Tiefbett und Hump - dem höchsten inneren Punkt des Reifens - und insbesondere nicht der Reifensitz selbst. Der Bereich des Materials geringerer Dichte übernimmt ausschließlich Führungseigenschaften bei der Reifenmontage.

Die Festlegung des Übergangsbereichs, insbesondere in Form eines ein- oder mehrteiligen Einlegeringes am Radkörper kann in verschiedenartigster Weise erfolgen. So kann gemäß bevorzugter Ausgestaltung vorgesehen sein, dass an der oder den Trennstellen des Übergangsbereichs Verschlussvorrichtungen zum Verbinden von Stirnseiten im Bereich der Trennstellen befindlichen Stirnseiten des Übergangsbereichs ausgebildet sind, wobei insbesondere vorgesehen ist, dass eine Verschlussvorrichtung an einer Stirnseite des Übergangsbereichs Federklammern und an der anderen Stirnseite einen kraftschlüssig an den Federklammern einrastenden Stift aufweist oder aber Stirnseiten des Übergangsbereichs im Bereich der Trennstelle mittels einer Clip-Verbindung verbindbar sind, wobei in letztgenanntem Fall die Ausbildung in konkreter Weise derart sein kann, dass an einer Stirnseite des Übergangsbereichs im Bereich einer Trennstelle zwei elastische Zungen mit hinterschnittenen Nasen und an der anderen Stirnseite ein Durchbruch ausgebildet ist, in welchen die Zungen einrastbar sind.

Alternativ oder zusätzlich kann weiterhin vorgesehen sein, dass Stirnseiten des Übergangsbereichs im Bereich zumindest einer Trennstelle miteinander verklebt sind und/oder der Übergangsbereich in den Radkörper eingeklebt ist.

Weitere Eigenschaften und Vorteile der Erfindung ergeben sich aus der nachfolgenden Beschreibung von Ausführungsbeispielen anhand der Zeichnungen. Es zeigt:
- Fig. 1: einen Radialschnitt durch einen Teilbereich einer ersten Ausführungsform eines erfindungsgemäßen Rades;
- Fig. 2: einen Radialschnitt durch eine zweite Ausführungsform eines erfindungsgemäßen Rades;
- Fig. 3: eine Seitenansicht einer weiteren Ausführungsform eines Einlegerings gemäß der Erfindung;
- Fig. 3a: eine Detailansicht des Verschlussmechanismus des Einlegerings der Fig. 3;
- Fig. 4: eine Seitenansicht einer zweiteiligen Ausbildung eines Einlegerings nach der Erfindung;
- Fig. 4a: eine Detailansicht des Verbindungsmechanismus des Formkörpers der Fig. 4; und
- Fig. 5: ein Schnitt durch einen Formkörper der Ausgestaltung der Fig. 2, 3 oder 4;

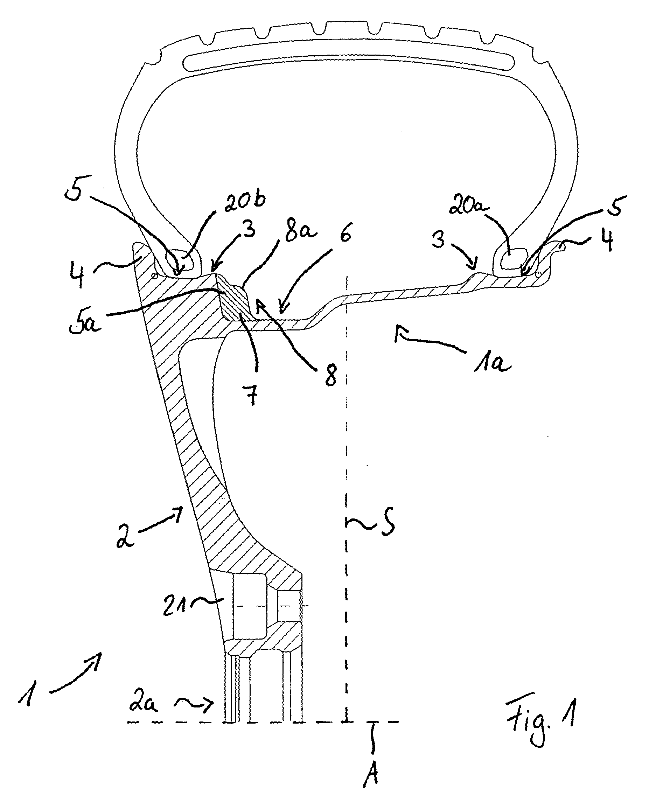

Fig. 1 zeigt einen Radialschnitt durch einen Teil des Rades mit einer Radnarbe 2a zu einer Felge 1a führenden Stern 2. Das Rad ist insbesondere ein Gussrad und besteht vorzugsweise aus Leitmetall, wie insbesondere einer Aluminiumlegierung, wie sie für derartige Leichtmetallräder üblicherweise genutzt werden.

Die Felge 1a weist ein äußeres und inneres Felgenhorn 4, 4' sowie jeweils auf der axialen Innenseite derselben einen Reifensitz 5, 5' auf, die ebenfalls axial und immerhin jeweils durch einen Hump 3, 3' mit gegenüber dem Reifensitz leicht erhöhten Durchmesser begrenzt sind. Axial unterhalb des äußeren Humps 3 weist das Rad ein Tiefbett 6 mit radial abgesenkter Höhe auf. Zwischen dem Tiefbett 6 und dem äußeren Felgensitz 5 bzw. des Hump 3 befindet sich ein Übergangsbereich mit einer Tiefbettschräge. Weiter ist ein auf dem Rad 1 aufgebrachter Reifen 20 dargestellt. Das insoweit beschriebene Rad entspricht hinsichtlich seiner Teile 2 bis 6 und darüber hinaus bezüglich seiner Kontur insgesamt, also auch hinsichtlich der Kontur des Übergangsbereichs 8 und der Tiefbettschräge 8, insbesondere auch der in den Figuren dargestellte Querschnitt üblicher Räder, und entspricht insbesondere üblichen Rädernormen. Zur Montage wird der Reifen 20 derart auf das Rad aufgebracht, dass er zunächst mit seiner inneren Reifenwulst 20a auf dem Reifensitz 5' aufsitzt, während sich seine äußere Reifenwulst 20b in Tiefbett 6 befindet. Durch Füllen mit Luft wandert der Reifenwulst 20b entlang der Tiefbettschräge 8a über den Hump 3 auf den äußeren Reifensitz 5, wozu die Tiefbettschräge 8a eben im Querschnitt mehr oder minder schräg am Reifen aufgebracht sein muss.

Erfindungsgemäß ist nur der Übergangsbereich zwischen Tiefbett 6 und Reifensitz 5 aus einem Material, vorzugsweise Kunststoff, ausgebildet, das eine kleinere Dichte hat als das Radmaterial, das, wie gesagt, vorzugsweise eine Aluminiumlegierung ist. Dabei weist insbesondere die am Übergangsbereich anliegende innere Flanke 5a des Reifensitzes keine Hinterschneidung in Bezug auf die Senkrechte S zur Radachse A auf, so dass das Rad 1 - ohne Übergangsbereich 7 - in einer Form ohne bewegliche Einzelteile, die bei Hinterschneidungen nötig wären, gegossen werden kann.

In der Ausbildung der Fig. 1 ist der Übergangsbereich massiv ausgebildet, bis ggf. auf eine Ventildurchführung (hierzu weiter unten).

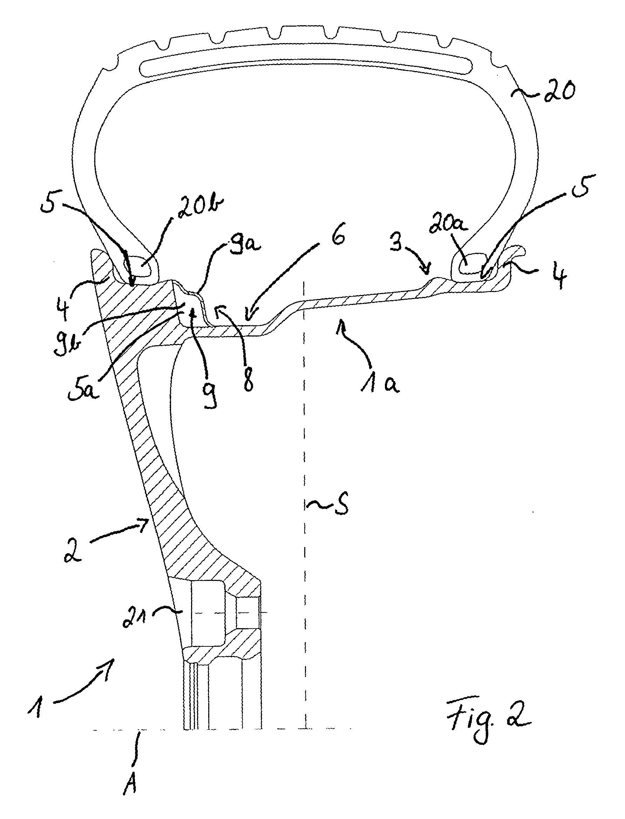

Bei der Ausgestaltung der Fig. 2 ist der Übergangsbereich zwischen Tiefbett 6, Radsitzflanke 5a und Radsitz durch einen Einlegering 9 mit einer durchgehenden inneren Wandung 9a gebildet. Er weist senkrecht zur Radsitzflanke 5a Versteifungsrippen 9b auf. Insoweit entspricht das erfindungsgemäße Rad 1 einem üblichen Rad mit Befestigungsbohrungen 21 um die Nabe 2a.

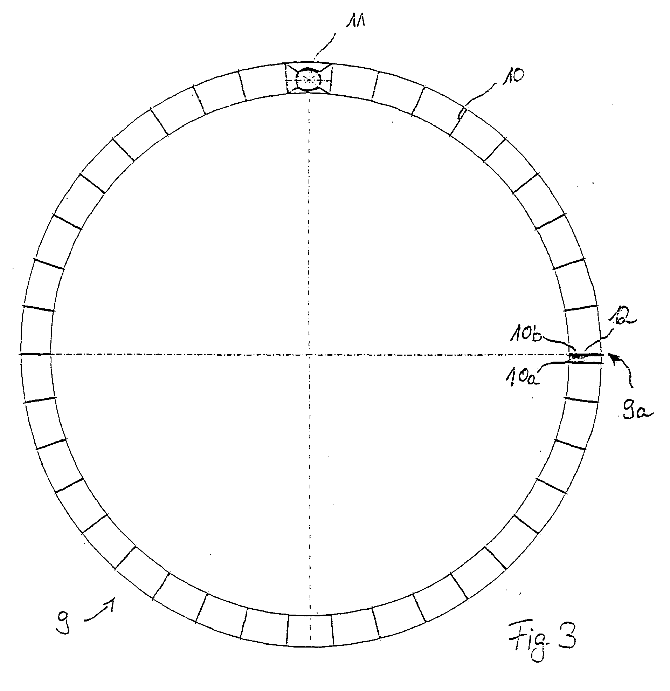

Die Fig. 3 zeigt einen einteiligen, hohlen Einlegering 9.1. Der Einlegering 9 weist einen inneren und einen äußeren Teilring 9.1a, 9.1b auf, die über Verstärkungsrippen 10 zur Versteifung des Hohlkörpers miteinander verbunden sind. Zwischen zwei Verstärkungsrippen 10 ist eine Ventildurchführung 11 angeordnet. An der Trennstelle 9a des Rings 9.1 ist eine Verschlussvorrichtung 12 ausgebildet, die in Fig. 3a im Detail dargestellt ist. Sie weist in einer Rippe 10a Federklammern 13 auf, an der Rippe 10b der gegenüberliegenden Stirnseiten im dargestellten Ausführungsbeispiel einen einstückig angeformten Bolzen 14. Dieser kann auch als separates Teil vorgesehen sein. Es können auch mehrere Bolzen vorgesehen sein. Hierdurch ist eine zuverlässige kraftschlüssige Verbindung an der Trennstelle 9a des Einlegerings 9 herstellbar. Ggf. können die Rippen 10a, 10b zusätzlich verklebt werden.

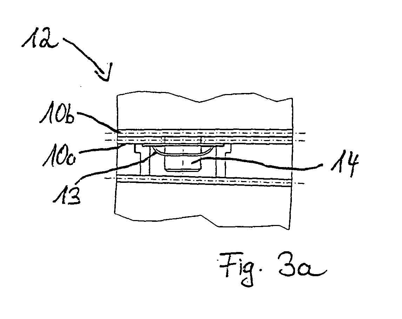

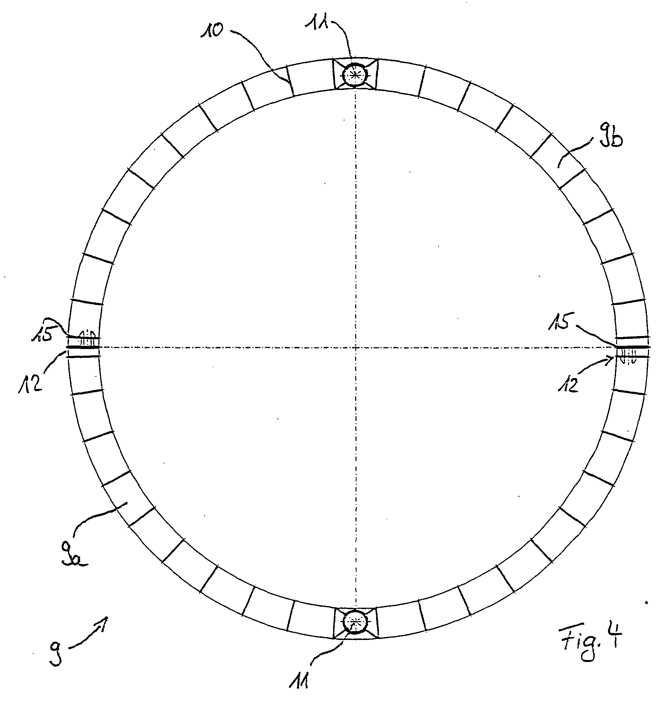

Die Fig. 4 zeigte eine weitere Ausbildungsform des Einlegerings 9. Er ist hier zweiteilig ausgeführt und wird durch Clipverbinder 15 zusammengesteckt. Um.Produktions- und Lagerhaltungskosten zu verringern, sind die beiden Teile 9a und 9b des zweiteiligen Formkörpers identisch ausgeführt, weswegen hier zwei Ventildurchführungen 11 vorhanden sind. Der Clipverbinder 15 ist in Fig. 4a im Detail dargestellt. Er besteht aus zwei elastischen Zungen 16 mit hinterschrittenen Nasen 16a, die fest mit dem einen Teil 9a des Formkörpers verbunden sind und in eine Aussparung 17 im anderen Teil 9b des Formkörpers einrasten können.

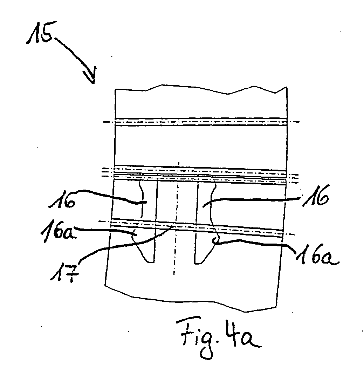

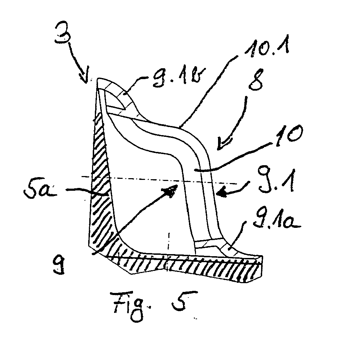

Wie aus Fig. 5 entnehmbar ist, bilden die Rippen 10 über ihrer Innenseite 10.1 zusammen mit dem inneren und äußeren Teilring 9.1a, 9.1b die Tiefbettschräge 8.

Die Funktionsweise der vorstehend beschriebenen erfindungsgemäßen Vorrichtung stellt sich wie folgt dar:

Das Rad 1 wird auf herkömmliche Art gegossen, wobei wenig beanspruchte Teile, insbesondere der Berührungsbereich 7 mit der Tiefbettschräge 8 nicht ausgeformt werden. Da die Gewichtsersparnis durch später eingesetzte leichte Formkörper 7 erfolgt, kann auf einen teuren und aufwändigen Hohlguss mit beweglichen Teilen oder verlorenen Kernen verzichtet werden. Nachdem das Rad 1 vollständig fertiggestellt wurde, wird ein massiver 7 oder hohler Einlegering 9 in das Tiefbett 6 der Felge 1 direkt an den Hump 3 anschließend eingesetzt. Der Formkörper 7, 9 wird dabei so ausgerichtet, dass die Ventildurchführung 11 des Formkörpers 7, 9 mit der des Rades 1 übereinstimmt. Der Formkörper 7, 9 wird nun im einteiligen Fall mit der Verschlussvorrichtung 12 geschlossen, die aufgrund ihrer federnden Wirkung dafür sorgen, dass der Formkörper 7, 9 sauber im Sitz 18 an der Felge 1 anliegt. Auch die Clipverbinder 15 der zweiteiligen Ausführung des Formkörpers 7, 9 verfügen über eine gewisse Elastizität, so dass auch hier gewährleistet ist, dass der Formkörper 7, 9 sauber am Hump 3 und an dem Sitz 18 im Tiefbett 6 der Felge anliegt.

Grundsätzlich kann der Einlegering auch in die Felge 1a eingeklebt oder auf sonstige bekannte Art mit der Felge 1a verbunden werden. Durch die normgemäße Ausformung des Formkörpers 7, 9 wird gewährleistet, dass bei der Montage des Reifens dieser an der Kontur des Formkörpers 7, 9 entlang über den Hump 3 in den Reifensitz 5 gleiten kann. Da der Formkörper aus einem Material mit einem spezifischen Gewicht kleiner als jenes des für den Guss verwendeten Leichtmetalls ist, und auch der Einlegering ggf. sogar Hohlbereiche aufweist, wird das Rad 1 leichter, wobei seine volle Funktionalität und Festigkeit erhalten bleibt.

### Bezugszeichenliste

- 1: Rad
- 1a: Felge
- 2: Stern
- 2a: Radnabe
- 3, 3': Hump
- 4, 4': Felgenhorn
- 5: Reifensitz
- 5a: Radsitzflanke
- 6: Tiefbett
- 7: Formkörper
- 8, 8a: Tiefbettschräge
- 9: Formkörper
- 9a: Trennstelle
- 9b: Versteifungsrippe
- 9.1: Einlegering
- 9.1a, 9.1b: äußerer Teilring
- 10: Verstärkungsrippen
- 10a, 10b: Rippen
- 10.1: Innenseite
- 11: Ventildurchführung
- 12: Verschlussvorrichtung
- 13: Federklammern
- 14: Bolzen
- 15: Clipverbinder
- 16: elastische Zunge
- 16a: Nasen
- 17: Aussparung
- 18: Sitz für Formkörper
- 20: Reifen
- 20a, b: Reifenwulst
- 21: Befestigungsbohrungen
- A: Reifenachse
- S: Senkrechte zu A

## Patentansprüche

1. Rad mit einer Felge, die ein Tiefbett und einen von diesem zum Reifensitz ansteigenden Übergangsbereich aufweist, **dadurch gekennzeichnet, dass** der Übergangsbereich (7) zwischen Tiefbett (6) und Reifensitz (5) durch ein Material mit gegenüber dem Radmaterial geringerer Dichte gebildet ist.

2. Rad nach Anspruch 1, **dadurch gekennzeichnet, dass** das Material des Übergangsbereichs (7, 9) aus Kunststoff ist.

3. Rad nach Anspruch 1 oder 2, **dadurch gekennzeichnet, dass** der Übergangsbereich (7, 9) ein aus mindestens einem Teilring (7, 9) mit mindestens einer Grenzstelle (9a) besteht.

4. Rad nach Anspruch 3, **dadurch gekennzeichnet, dass** der Einlegering (7, 9) aus zwei Teilringen besteht.

5. Rad nach Anspruch 4, **dadurch gekennzeichnet, dass** die Teilringe identisch sind.

6. Rad nach einem der vorangehenden Ansprüche, **dadurch gekennzeichnet, dass** die Übergangsbereiche (7, 9) Hohlräume aufweisen.

7. Rad nach einem der vorangehenden Ansprüche, **dadurch gekennzeichnet, dass** die Übergangsbereiche (7, 9) Verstärkungsrippen (10) aufweisen.

8. Rad nach einem der Ansprüche 1 bis 5, **dadurch gekennzeichnet, dass** der Übergangsbereich (7) massiv ausgebildet ist.

9. Rad nach einem der vorangehenden Ansprüche, **dadurch gekennzeichnet, dass** der Übergangsbereich mindestens einen Ventildurchlass aufweist.

10. Rad nach einem der vorangehenden Ansprüche, **dadurch gekennzeichnet, dass** an der oder den Trennstellen (9a) des Übergangsbereichs (7, 9) Verschlussvorrichtungen (12) zum Verbinden von Stirnseiten im Bereich der Trennstellen (9a) befindlichen Stirnseiten des Übergangsbereichs ausgebildet sind.

11. Vorrichtung nach Anspruch 10, **dadurch gekennzeichnet, dass** eine Verschlussvorrichtung (12) an einer Stirnseite des Übergangsbereichs (7, 9) Federklammern (13) und an der anderen Stirnseite einen kraftschlüssig an den Federklammern einrastenden Stift (14) aufweist.

12. Rad nach einem der Ansprüche 1 bis 10, **dadurch gekennzeichnet, dass** Stirnseiten des Übergangsbereichs (9) im Bereich der Trennstelle mittels einer Clip-Verbindung (15) verbindbar sind.

13. Rad nach Anspruch 12, **dadurch gekennzeichnet, dass** an einer Stirnseite des Übergangsbereichs (9) im Bereich einer Trennstelle zwei elastische Zungen (16) mit hinterschnittenen Nasen (16a) und an der anderen Stirnseite ein Durchbruch ausgebildet ist, in welchen die Zungen (16) einrastbar sind.

14. Rad nach einem der Ansprüche 3 bis 13, **dadurch gekennzeichnet, dass** Stirnseiten des Übergangsbereichs im Bereich zumindest einer Trennstelle miteinander verklebt sind.

15. Rad nach einem der vorangehenden Ansprüche, **dadurch gekennzeichnet, dass** der Übergangsbereich in den Radkörper eingeklebt ist.
